# EUROPEAN PATENT APPLICATION

(11) **EP 4 841 773 A1**
(43) Date of publication of application: **18.11.2026**
(21) Application number: 25785442.2
(22) Date of filing: 17.02.2025
(51) Int. Cl.: H01M 50/244, H01M 50/204, H01M 50/251

(54) **ENERGY STORAGE SYSTEM AND CHARGING NETWORK**

(30) Priority: 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN); LI, Zhonghong, Ningde, Fujian 352100 (CN)
(74) Representative: Straus, Alexander
(86) International application number: PCT/CN2025/077674
(87) International publication number: WO 2025/213960

(57) **Abstract**

Embodiments of the present disclosure provide an energy storage system and a charging network. The energy storage system includes a support frame and at least one energy storage device. The support frame has a mounting space inside. Each energy storage device comprises a control module, a compartment body, and a plurality of energy units. The plurality of energy units are accommodated in the compartment body. The control module is used for electrically controlling the energy units in the compartment body. The compartment body is arranged in the mounting space and is connected to the support frame.

## Description

This application is based on and claims priority to Chinese Patent Application No. PCT/CN2024/112473 filed on August 15, 2024, Chinese Patent Application No. PCT/CN2024/112498 filed on August 15, 2024, Chinese Patent Application No. PCT/CN2024/111558 filed on August 12, 2024, Chinese Patent Application No. PCT/CN2024/112387 filed on August 15, 2024, Chinese Patent Application No. 202421984591.6 filed on August 15, 2024, Chinese Patent Application No. PCT/CN2024/112558 filed on August 15, 2024, Chinese Patent Application No. PCT/CN2024/106588 filed on July 19, 2024, Chinese Patent Application No. PCT/CN2024/104575 filed on July 09, 2024, Chinese Patent Application No. PCT/CN2024/086624 filed on April 08, 2024, Chinese Patent Application No. PCT/CN2024/104413 filed on July 09, 2024, Chinese Patent Application No. PCT/CN2024/127187 filed on October 24, 2024, Chinese Patent Application No. PCT/CN2024/086600 filed on April 08, 2024, which are incorporated by reference in its entirety.

### TECHNICAL FIELD

The present disclosure relates to the technical field of batteries, and particularly relates to an energy storage system and a charging network.

### BACKGROUND

With the rapid development of technology, electric energy has become an indispensable energy source in people work and daily life. To ensure a smooth supply of electric energy to realize normal work and daily activities, energy storage apparatuses are needed. As apparatuses for cyclically storing and releasing the electric energy, the energy storage apparatuses can store the electric energy by charging or supply the stored electric energy to electrical apparatuses by discharging. The energy storage apparatuses are widely used in the fields of industrial power supply, household power supply, temporary power supply, mobile power supply, wind power generation, solar power generation, energy storage power stations, or the like.

In the development of the energy storage apparatuses, besides improving the performance of the energy storage apparatuses, how to reduce the mounting reliability of the energy storage apparatuses is also an issue that cannot be ignored. Therefore, how to reduce the mounting reliability of the energy storage apparatuses is a technical problem that continues to be relieved in energy storage technology.

### SUMMARY OF THE INVENTION

In view of this, embodiments of the present disclosure are expected to provide an energy storage system and a charging network, which can improve the mounting reliability of the energy storage apparatus.

To achieve the above-mentioned objective, a first aspect of the embodiments of the present disclosure provides an energy storage system, including:
a support frame, where the support frame has a mounting space therein; and
at least one energy storage apparatus, where each energy storage apparatus includes a control module, a compartment body, and a plurality of energy units, the plurality of energy units are accommodated in the compartment body, the control module is used to perform electrical control on the energy units in the compartment body, and the compartment body is arranged in the mounting space and is connected to the support frame.

According to the energy storage system provided by the embodiments of the present disclosure, the support frame having the mounting space is provided, and the compartment body is arranged in the mounting space and is connected to the support frame. In other words, the compartment body is mounted at a use site through the support frame. The support frame can support, protect and fix the compartment body, which helps to improve the strength of the energy storage apparatus after mounting, thereby improving the mounting reliability of the energy storage apparatus. In addition, the support frame can be pre-assembled before being assembled with the energy storage apparatus, which reduces the workload of on-site mounting, improves assembly efficiency, facilitates customer use, and reduces use costs of the customer.

In some embodiments, the support frame includes at least one support unit, and each support unit is provided with at least one energy storage apparatus; and the support unit includes a plurality of support pillars and a plurality of connecting beams, and the support pillars are connected through the plurality of connecting beams and enclose the mounting space.

In the embodiments, the support unit is configured to include a plurality of support pillars and a plurality of connecting beams, and the support pillars are connected through the plurality of connecting beams and enclose a frame structure. This structure is simple, improves assembly efficiency, and can support, protect, and fix the compartment body, thereby helping to improve the strength of the energy storage apparatus after mounting.

In some embodiments, there are a plurality of mounting spaces and a plurality of energy storage apparatuses, and the compartment body of the at least one energy storage apparatus is arranged in each mounting space.

Here, by providing the plurality of mounting spaces and the plurality of energy storage apparatuses, the compartment bodies of the plurality of energy storage apparatuses can be placed in the plurality of mounting spaces. Therefore, the mounting of the plurality of energy storage apparatuses can be implemented through the support frame, improving the strength of the plurality of energy storage apparatuses after mounting, thereby improving the mounting reliability of the plurality of energy storage apparatuses.

In some embodiments, some of the connecting beams are spaced apart in a height direction of the support unit, the connecting beams and the support pillars divide the mounting space into a plurality of sub-regions, and the sub-regions are in one-to-one correspondence with the compartment bodies.

In the embodiments, the plurality of sub-regions are formed by spacing the connecting beams apart in the height direction of the support unit, and the sub-regions are in one-to-one correspondence with the compartment bodies. This helps to improve the structural strength of the support unit, and helps to reduce the number of the connecting beams while improving the support strength of the support unit for the compartment body, thereby helping to reduce costs and improve assembly efficiency.

In some embodiments, each compartment body is connected to the support pillar.

Connecting each compartment body to the support pillar helps to improve the connection strength between the compartment body and the support unit.

In some embodiments, the support unit includes a support plate arranged at the bottom end of the support pillar, and the support plate is used to connect to a use region of the energy storage system.

In the embodiments, the support plate is provided, and the support pillar is connected to the use region through the support plate, further improving the mounting reliability of the support frame, thereby further improving the mounting reliability of the energy storage apparatus.

In some embodiments, the support frame further includes a first reinforcing beam, some of the support units are arranged in a length direction of the compartment body, and the adjacent support units arranged in the length direction of the compartment body are connected through the first reinforcing beam.

In this way, the adjacent support units arranged in the length direction of the compartment body are connected into a whole through the first reinforcing beam, further improving the structural strength of the support frame.

In some embodiments, the support frame further includes a second reinforcing beam, some of the support units are arranged in a width direction of the compartment body, and the adjacent support units arranged in the width direction of the compartment body are connected through the second reinforcing beam.

In this way, the adjacent support units arranged in the width direction of the compartment body are connected into a whole through the second reinforcing beams, further improving the structural strength of the support frame.

In some embodiments, two adjacent compartment bodies are welded, clamped, locked or connected by a fixing member in a height direction of the support frame.

In the embodiments, the two adjacent compartment bodies in the height direction are connected through the fixing member and can be positionally limited by the fixing member, helping to reduce the risk that the two adjacent compartment bodies move mutually after being stacked, thereby helping to improve the structural stability of the energy storage apparatus.

In some embodiments, the plurality of compartment bodies include a first compartment body and a second compartment body, the first compartment body is located above the second compartment body, a limiting pin is arranged at the bottom of the first compartment body, a limiting hole is formed in the top of the second compartment body, and the limiting pin is clamped in the limiting hole.

In this way, the two adjacent compartment bodies in the height direction can achieve, through the mating of the limiting pin and the limiting hole, the purpose of restricting the relative movement of the two adjacent compartment bodies by a simple structure.

In some embodiments, a first limiting member is arranged at the bottom of the first compartment body, the first limiting member is provided with a limiting slot, a second limiting member is arranged on the top of the second compartment body, and the second limiting member is provided with a limiting hole, and two ends of the limiting pin are clamped in the limiting slot and the limiting hole respectively.

In the embodiments, during the process of stacking the compartment bodies in the height direction, the limiting pin is mated with the limiting slot in the upper compartment body of two adjacent compartment bodies and mated with the limiting hole in the lower compartment body of the two adjacent compartment bodies. Therefore, the purpose of restricting the relative movement of the two adjacent compartment bodies is implemented by a simple structure.

In some embodiments, at least some of the control modules are arranged in the compartment body.

Due to a dimension problem of the energy unit, there is a situation that the energy unit cannot fully fill the compartment body, and by arranging the control module in the compartment body, the space in the compartment body can be fully utilized, thereby further improving the space utilization rate of the compartment body.

In addition, the control module and the compartment body are mounted together, and a pipeline and a line of the control module are connected upon shipment, reducing the workload of on-site mounting of the pipeline and the line of the control module, thereby helping to reduce mounting costs.

In some embodiments, at least some of the control modules are arranged outside the compartment body.

Here, at least some of the control modules are arranged outside the compartment body, so that the influence of the control module on the energy unit can be reduced to a certain degree, and the control module does not occupy the space in the compartment body. In addition, this further helps to maintain and replace the control module.

In some embodiments, the energy storage apparatus includes a thermal management module, and the thermal management module is used to manage temperatures of the plurality of energy units.

In the embodiments, the thermal management module is provided, and the thermal management module can manage the temperatures of the energy units, thereby reducing the risk of temperature runaway of the energy units.

In some embodiments, at least some of the thermal management modules are arranged in the compartment bodies.

Due to a dimension problem of the energy unit, there is a situation that the energy units cannot fully fill the compartment body, and by arranging the thermal management module in the compartment body, the space in the compartment body can be fully utilized, thereby further improving the space utilization rate of the compartment body.

In addition, the thermal management module and the compartment body are mounted together, and a pipeline and a line of the thermal management module are connected upon shipment, reducing the workload of on-site mounting of the pipeline and the line of the thermal management module, thereby helping to reduce mounting costs.

In some embodiments, at least some of the thermal management modules are arranged outside the compartment bodies.

Here, at least some of the thermal management modules are arranged outside the compartment bodies, such that the influence of the thermal management module on the energy unit can be reduced to a certain degree, and the thermal management module does not occupy the space in the compartment body. In addition, this helps to maintain and replace the thermal management module.

In some embodiments, the energy unit is a battery cell, and a weight of the single energy unit is 5 kg to 60 kg.

The energy unit has a proper weight, so that a proper amount of energy units can be placed in the compartment body, and energy density is moderate under the condition of meeting transportation requirements.

In some embodiments, the energy storage apparatus includes an energy storage compartment which includes the compartment body and components arranged in the compartment body, and a weight of the energy storage compartment is denoted as M, M being less than or equal to 45 tons.

To enable the single energy storage compartment to meet the transportation limits of some countries, an overall weight of the energy storage compartment bodies is controlled to be not greater than 45 tons, and the integration level of the energy storage compartment is as high as possible, so that the workload of on-site mounting can be reduced, thereby increasing the energy per unit area, and reducing the investment costs of the customer.

In some embodiments, the energy storage apparatus includes the energy storage compartment which includes the compartment body and components arranged in the compartment body, the weight of the energy storage compartment is denoted as M, and a total weight of the energy units in the compartment body is denoted as M1, (M1/M) × 100% ≥ 60%.

In this way, on one hand, the weight ratio of the energy units in the compartments per unit volume can be increased, thus increasing the electric quantity of the energy storage apparatus per unit volume; on the other hand, during the transportation of the energy storage apparatus, more energy units which contribute to energy storage capacity and are high in production difficulty and cannot be produced at a destination are transported, while other structures can be produced at a place closer to the destination without transportation or with reduced transportation; and after the compartments are assembled into the energy storage apparatus, the transportation cost of the assembled energy storage apparatus is reduced.

In some embodiments, (M1/M) × 100% ≥ 80%.

In this way, this further helps to reduce the transportation costs of the assembled energy storage apparatus.

In some embodiments, the energy storage apparatus includes the energy storage compartment which includes the compartment body and components arranged in the compartment body, where the weight of the energy storage compartment is denoted as M; the plurality of battery apparatuses are arranged in the compartment body, each battery apparatus includes a box body and the plurality of energy units; the plurality of energy units are accommodated in the box body; and a total weight of the battery apparatuses is denoted as M2, 70% ≤ (M2/M) × 100% ≤ 90%.

The energy density of the energy storage cabinet and the structural strength of the compartments can be balanced, thus improving the practicability of the compartments.

In some embodiments, volumes of the compartments are V, the total volume of the energy units in the compartments is V1, (V1/V) × 100% ≥ 30%,

On one hand, the volume proportion of the energy units in the compartments per unit volume can be increased, thus increasing the electric quantity of the energy storage apparatus per unit volume; on the other hand, during the transportation of the energy storage apparatus, more energy units which contribute to energy storage and are high in production difficulty and cannot be produced at the destination are transported, while other functional elements such as control elements of the energy storage apparatus can be produced at the place closer to the destination without transportation or with reduced transportation; and after the compartments are assembled into the energy storage apparatus, the transportation cost of the assembled energy storage apparatus is reduced.

In some embodiments, (V1/V) × 100% ≥ 50%.

The transportation cost of the assembled energy storage apparatus is further reduced.

In some embodiments, the volumes of the compartment bodies are V; the plurality of battery apparatuses are arranged in the compartment bodies, each including the box and the plurality of energy units; the plurality of energy units are accommodated in the box; and the total volume of the battery apparatuses is V2, 50% ≤ (V2/V) × 100% ≤ 80%.

The energy density of the energy storage apparatus and the structural strength of the compartment body can be balanced, thereby improving the practicability of the compartment body.

In some embodiments, the energy storage apparatus includes the energy storage compartment which includes the compartment body and components arranged in the compartment body, where energy of the energy storage compartment is denoted as E, a dimension of the compartment body in the length direction is denoted as a, a dimension of the compartment body in the width direction is denoted as b, 250KW/*m²* ≤ E/(a × b) ≤ 700KW/*m²*.

The energy density of the energy storage apparatus and the mass settings of the compartments are balanced, thus improving the practicability of the energy storage apparatus and facilitating the transportation of the energy storage apparatus.

In some embodiments, 450KW/*m*² ≤ E/(a × b) ≤ 600KW/*m²*.

The energy density of the energy storage apparatus and the mass settings of the compartment body can be further improved, thereby facilitating the transportation of the energy storage apparatus.

In some embodiments, a dimension of the compartment body in a height direction is less than a dimension of a standard container in a height direction.

The dimension of the compartment body in the height direction is set to be less than the dimension of the standard container in the height direction to reduce the dimension of the compartment body. This reduces the manufacturing costs of the energy storage apparatus, and can further reduce a total weight of the compartment body that accommodate the energy units and the like, helping to relieve the problem of overweight in transportation, and reducing the transportation costs of the energy storage apparatus.

In some embodiments, the dimension of the compartment body in the length direction is consistent with a dimension of the standard container in a length direction, and the dimension of the compartment body in the width direction is consistent with a dimension of the standard container in a width direction.

In the embodiments, the dimension of the compartment body in the length direction is set to be consistent with the dimension of the standard container in the length direction, and the dimension of the compartment body in the width direction are set to be consistent with the dimension of the standard container in the width direction, helping to facilitate compatibility with transportation tools and lifting appliances of the existing standard container, and reducing the transportation costs of the energy storage cabinet, thereby reducing the use costs of the energy storage cabinet.

In some embodiments, the standard container is a 20-foot standard container, with a height of 2,896 mm, 2,591 mm or 2,438 mm.

In some embodiments, the dimension of the compartment body in the height direction is greater than or equal to 850 mm and less than 2,896 mm.

In the embodiments, the dimension of the compartment body in the height direction is set to be 850mm ≤ h < 2,896mm, helping to control the total weight of the compartment body and the components in the compartment body to be not greater than 45 tons, and increasing the volume and electric quantity of the energy storage apparatus as much as possible, thereby further reducing the use costs of the energy storage cabinet.

In some embodiments, the dimension of the compartment body in the height direction is greater than or equal to 1,300 mm and less than or equal to 2,400 mm.

This further helps to improve the volume and electric quantity of the energy storage apparatus, and further reduces the use costs of the energy storage cabinet.

The embodiment of the present disclosure further provides an energy storage system, including a power conversion apparatus and the above-mentioned energy storage apparatus, where the power conversion apparatus is use to electrically connect a power generation apparatus with the energy storage apparatus.

The embodiment of the present disclosure further provides the charging network which includes a charging pile and the above energy storage apparatus or the above energy storage system, and the energy storage apparatus is configured to provide electric energy for the charging pile.

### BRIEF DESCRIPTION OF THE DRAWINGS

FIG. 1 is a schematic structural diagram of a charging network provided by some embodiments of the present disclosure;
FIG. 2 is a schematic structural diagram of an energy storage system provided by some embodiments of the present disclosure;
FIG. 3 is a schematic structural diagram of an energy storage apparatus provided by some embodiments of the present disclosure;
FIG. 4 is a schematic structural diagram of an energy storage system provided by some embodiments of the present disclosure;
FIG. 5 is a schematic structural diagram of an energy storage system provided by some embodiments of the present disclosure;
FIG. 6 is a schematic structural diagram of an energy storage system provided by some embodiments of the present disclosure;
FIG. 7 is a schematic structural diagram of a control module provided by some embodiments of the present disclosure;
FIG. 8 is a schematic structural diagram of two matched adjacent compartment bodies of an energy storage apparatus provided by an embodiment of the present disclosure;
FIG. 9 is a schematic structural diagram of a battery apparatus provided by some embodiments of the present disclosure; and
FIG. 10 is a schematic structural diagram of an energy storage system provided by some embodiments of the present disclosure.

Description of reference numerals:
1000: charging network; 2000: energy storage system; 100: energy storage apparatus; 100a: energy storage compartment; 10: compartment body; 2: energy unit; 3: first compartment body; 31: first limiting member; 311: limiting slot; 4: second compartment body; 41: second limiting member; 411: limiting hole; 42: limiting pin; 20: thermal management module; 30: control module; 301: main control module; 302: power distribution module; 303: general control module; 304: fire control module; 50: support frame; 51: support unit; 511: support pillar; 512: connecting beam; 52: support plate; 53: first reinforcing beam; 54: second reinforcing beam; 55: sub-region; 60: use region; 70: battery apparatus; 71: box body; 711: first box body; 712: second box body; 200: charging pile; 300: pow conversion apparatus; 3000: power generation apparatus.

### DETAILED DESCRIPTION

Unless otherwise specified, all embodiments of the present disclosure and optional embodiments may be combined with each other to form a new technical solution.

Unless otherwise specified, all the technical features of the present disclosure and optional technical features may be combined with each other to form a new technical solution.

With the development of clean energy, electric energy is used as driving power in more and more devices, leading to the rapid development of power batteries that can store a large amount of electric energy and be subjected to multiple cycles of charging and discharging, such as lithium-ion batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields.

In the embodiments of the present disclosure, energy units can be secondary batteries, which refer to energy units that active materials can be activated by charging for continuous used after discharging.

The energy unit may be a lithium ion battery, a sodium ion battery, a sodium-lithium ion battery, a lithium metal battery, a sodium metal battery, a lithium-sulfur battery, a magnesium ion battery, a nickel-hydrogen battery, a nickelcadmium battery, a lead storage battery and the like, which is not limited in the embodiments of the preset disclosure.

The energy unit generally includes an electrode assembly. Only as an example, an electrode assembly includes a positive electrode, a negative electrode, and a separator, and the separator is arranged between the negative electrode and the positive electrode. In the charging and discharging process of the energy unit, active ions (such as lithium ions) are intercalated and de-intercalated between the positive electrode and the negative electrode in a reciprocating manner. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in the thickness direction thereof, and the positive electrode active material is arranged on either or both of the two opposite surfaces of the positive electrode current collector.

As an example, a positive electrode current collector can be prepared from a metal foil, a conductive polymer material, or a carbon material or can be a composite current collector. For example, the positive electrode current collector is prepared from the metal foil, which can be a pure metal, an alloy, and a surface-treated metal, including but not limited to stainless steel, copper, aluminum, nickel, titanium or silver and the like. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene glycol terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, there is no limitation on the materials in the present disclosure, and other traditional materials that can be used as the positive electrode active materials of the battery can also be used.

In some embodiments, the negative electrode may be a negative electrode plate, and the negative electrode plate may include a negative electrode current collector.

As an example, a negative electrode current collector can be prepared from a metal foil, a conductive polymer material, or a carbon material or can be a composite current collector. For example, the positive electrode current collector is prepared from the metal foil, which can be a pure metal, an alloy and a surface-treated metal, including but not limited to stainless steel, copper, aluminum, nickel, titanium or silver and the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the negative electrode plate can include a negative electrode current collector and a negative electrode material layer arranged on at least one surface of the negative electrode current collector.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator film may be selected from at least one of glass fiber, non-woven fabric, polyethylene, polypropylene, polyvinylidene fluoride, and ceramic. The separator can be either a single-layer thin film or a multi-layer composite thin film, which is not particularly limited. When the separator is a multi-layer composite thin film, the materials of the layers can be the same or different, which is not particularly limited. The spacer may be an independent component located between the positive electrode and the negative electrode, or may be attached to surfaces of the positive electrode and the negative electrode. A surface of a separator can be coated with an inorganic particle coating, an organic particle coating, or an organic/inorganic composite coating.

In some embodiments, the spacer is a solid electrolyte. The solid electrolyte is arranged between the positive electrode and the negative electrode and plays a role in transmitting ions and isolating the positive electrode and the negative electrode.

In some embodiments, the energy unit further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

The electrode assembly can be of a winding structure, a stacking structure, or a hybrid structure of winding and stacking.

In some embodiments, the electrode assembly is of a winding structure. The positive electrode plate and the negative electrode plate are wound into the wound structure.

In some embodiments, the electrode assembly is of a laminated structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided and arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with tabs, and the tabs can conduct current out from the electrode assembly. The tab includes a positive electrode tab and a negative electrode tab.

In some embodiments, the energy units can include shells. The shells can be steel shells, aluminum shells, plastic shells (such as polypropylene), composite metal shells (such as copper-aluminum composite shells) or aluminum-plastic films and the like. In some embodiments, the shells can be of a sealed structure or a non-sealed structure. As an example, when the shell is of a non-sealed structure, the shell can protect the electrode assembly. A sealing bag is also included between the shell and the electrode assembly, and the sealing bag is configured to encapsulate the electrode assembly and the electrolyte. Specifically, the sealing bag can be a bag-shaped insulating member or an aluminum-plastic film. The shells of the sealed structure are used for packaging the electrode assembly, the electrolyte and the like.

As an example, the energy units can be cylindrical energy units, prismatic energy units, soft package energy units or energy units in other shapes; the prismatic energy units include a square-shell energy unit, a blade-shaped energy unit, and a polygon-prism battery; and the polygon-prism battery is a hexagonal battery and the like, which is not particularly limited in the present disclosure.

In some embodiments, the shells include end covers and shell bodies, the shell bodies are provided with openings, and the end covers cover the openings. The shell bodies can be provided with one or more openings. One or a plurality of end covers may also be provided.

In some embodiments, the shells are provided with at least one electrode terminal which is electrically connected to the tab. The electrode terminals can be directly connected to the tabs and can also be indirectly connected to the tabs through current collecting components. The electrode terminals can be arranged on the end covers or the shell bodies.

In some embodiments, the energy storage apparatus includes an energy storage container and the like.

In related technology, there is a problem of insufficient strength after the compartment bodies are stacked, which may lead to the risk of device falling in the event of natural disasters such as earthquakes and typhoons.

In view of this, the embodiments of the present disclosure provide a new technical solution, which is suitable for an energy storage system and a charging network including the energy storage system.

The energy storage system can be used for an energy storage power station, a wind power generation system, a solar power generation system, a mobile power system, a temporary power supply system, or the like. The energy storage system can store electric energy as needed and output electric energy at the appropriate time. For example, the energy storage system can store electric energy during low electricity consumption periods and provide electric energy for relevant users or electrical devices during peak electricity consumption periods.

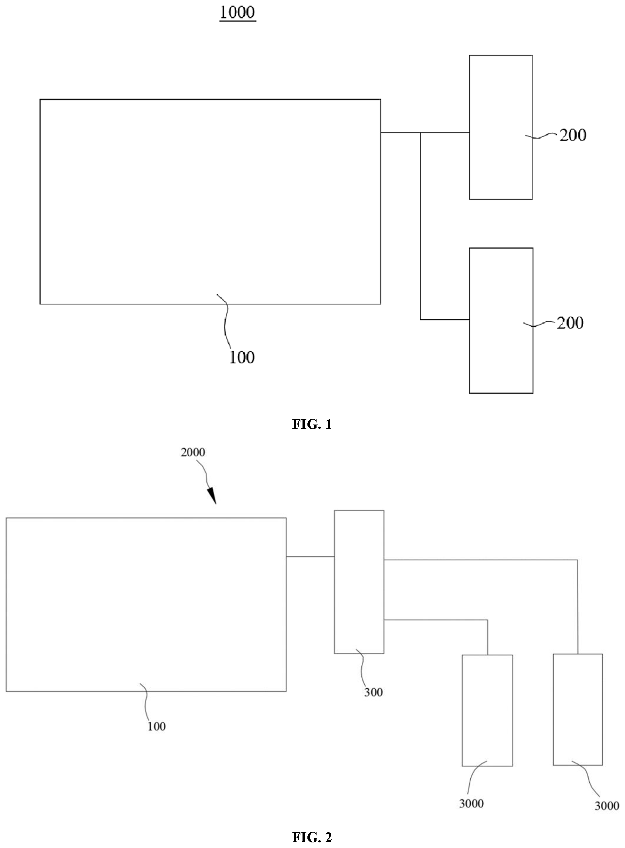

With reference to FIG. 1, FIG. 1 is a schematic structural diagram of a charging network 1000 provided by an embodiment of the present disclosure. The embodiment of the present disclosure provides the charging network 1000, and the charging network 1000 includes a charging pile 200 which is configured to charge an electrical device. The charging network 1000 can further include an energy storage apparatus 100 or an energy storage system 2000, and the energy storage apparatus 100 is electrically connected to the charging pile 200 and is configured to provide electric energy for the charging pile 200.

It is to be noted that the charging pile 200 is electrically connected to an energy unit 2 in the energy storage apparatus 100 through a cable, and the energy unit 2 can provide the stored electric energy for the charging pile 200. The charging pile 200 is provided with one or more connectors, and the connectors are connected to electrical device (such as a vehicle) so that energy can be supplemented to the electrical device. The charging network 1000 applies the energy storage apparatus 100, thus the reliability of the charging network 1000 can be effectively improved, and the deployment flexibility of the charging network 1000 can be improved.

The energy storage apparatus 100 can be located inside the charging pile 200 (such as a storage and charging all-in-one machine) or outside the charging pile 200.

In one charging network 1000, one charging pile 200 may be provided, and the energy storage apparatus 100 provides electric energy for the one charging pile 200. Alternatively, a plurality of charging piles 200 may be provided, and the energy storage apparatus 100 provides electric energy for the plurality of charging piles 200.

As an example, as shown in FIG. 1, the charging network 1000 includes one energy storage apparatus 100 and two charging piles 200, and the one energy storage apparatus 100 provides electric energy for the two charging piles 200.

With reference to FIG. 2, FIG. 2 is a schematic structural diagram of the energy storage system 2000 provided by an embodiment of the present disclosure. The embodiment of the present disclosure provides the energy storage system 2000. The energy storage system 2000 includes a power conversion apparatus, and the power conversion apparatus can be electrically connected to power generation apparatuses 3000 and the energy storage apparatus 100 so as to convert electric power provided by the power generation apparatuses 3000. The power conversion apparatus performs power conversion on the electric energy provided by the power generation apparatuses 3000 and then stores in the energy storage apparatus 100.

The power conversion apparatus is connected between the power generation apparatuses 3000 and the energy storage apparatus 100. The power generation apparatuses 3000 are configured to generate the electric energy, and the power generation apparatuses 3000 are also configured to store the generated electric energy in the energy storage apparatus 100 through the power conversion apparatus. The energy storage system 2000 applies the energy storage apparatus 100, and thus the operation reliability of the energy storage system 2000 can be effectively improved. In specific implementation, the power generation device can be particularly a solar panel, a hydroelectric power generation device, a thermal power generation device and the like. The specific type of the power generation device is not limited in the present disclosure.

As an example, as shown in FIG. 2, the energy storage system 2000 includes the energy storage apparatus 100 and the power conversion apparatus, the two power generation apparatuses 3000 transmit the generated electric energy to the power conversion apparatus, and the power conversion apparatus stores the electric energy in the energy storage apparatus 100.

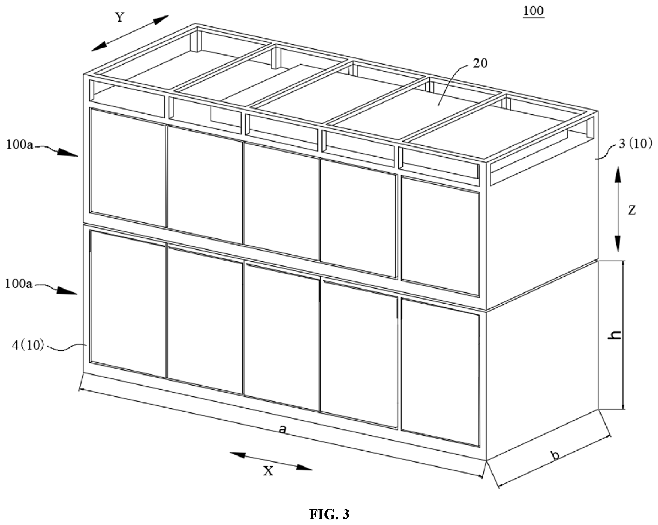

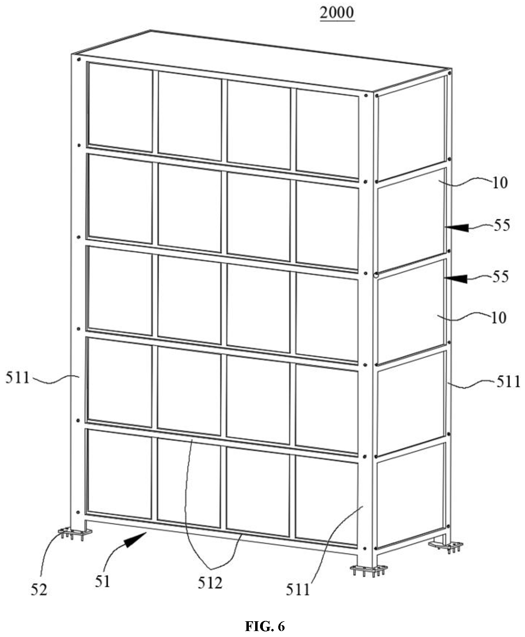

With reference to FIG. 3 to FIG. 10, some embodiments of the present disclosure provide an energy storage system 2000. The energy storage system 2000 includes a support frame 50 and at least one energy storage apparatus 100. The support frame has a mounting space 50 therein. Each energy storage apparatus 100 includes a control module 30, a compartment body 10, and a plurality of energy units 2. The plurality of energy units 2 are accommodated in the compartment body 10. The control module 30 is used to perform electrical control on the energy units 2 in the compartment body 10. The compartment body 10 is arranged in the mounting space and is connected to the support frame 50.

The compartment body 10 may be a cabinet or a container. The compartment body 10 has a cavity therein. Other components of the energy storage apparatus 100 may be accommodated in the cavity. The compartments 10 can be of a hexahedron structure.

The compartment bodies 10 are generally of a cuboid structure, the length direction and the width direction of the compartment bodies 10 are both parallel to a horizontal plane, and the length direction of the compartment bodies 10 is parallel to the longest edge of the cuboid structure of the compartment bodies 10. A height direction of the compartment body 10 is perpendicular to the ground. By way of example, as shown in FIG. 3, the length direction of the compartment body 10 is represented by X, the width direction of the compartment body 10 is represented by Y, and the height direction of the compartment body 10 is represented by Z.

Each energy storage apparatus 100 may have one or a plurality of compartment bodies 10.

In the embodiments of the present disclosure, "a plurality of" refers to two or more.

The plurality of compartment bodies 10 of the energy storage apparatus 100 are arranged in the height direction of the compartment body 10, and it may be understood as that the plurality of compartment bodies 10 are stacked or connected in the height direction of the compartment body 10.

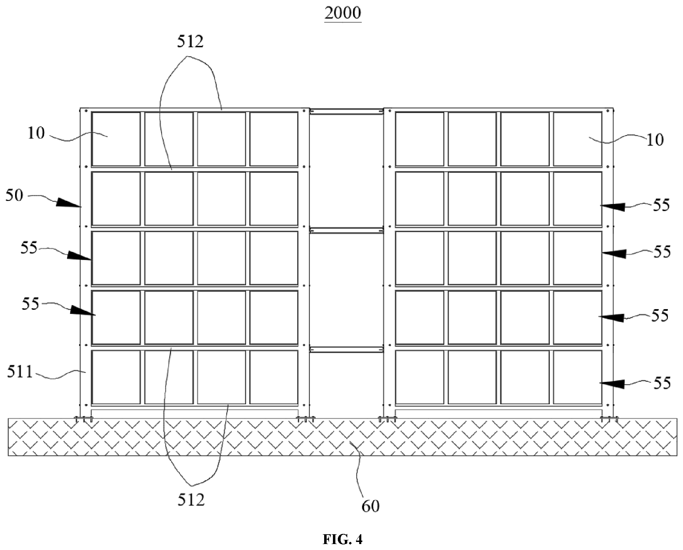

With reference to FIG. 3 and FIG. 4, there may be one, two, or more than two compartment bodies 10 in the energy storage apparatus 100. For example, the energy storage apparatus 100 includes two compartment bodies 10, and the two compartment bodies 10 are stacked in the height direction. For another example, the energy storage apparatus 100 includes three compartment bodies 10, and the three compartment bodies 10 are stacked in the height direction.

The energy storage apparatus 100 further includes a plurality of energy units 2, and the energy units 2 are used to provide or store electric energy.

The energy unit 2 may be a battery cell or a battery apparatus 70 formed by electrically connecting a plurality of battery cells.

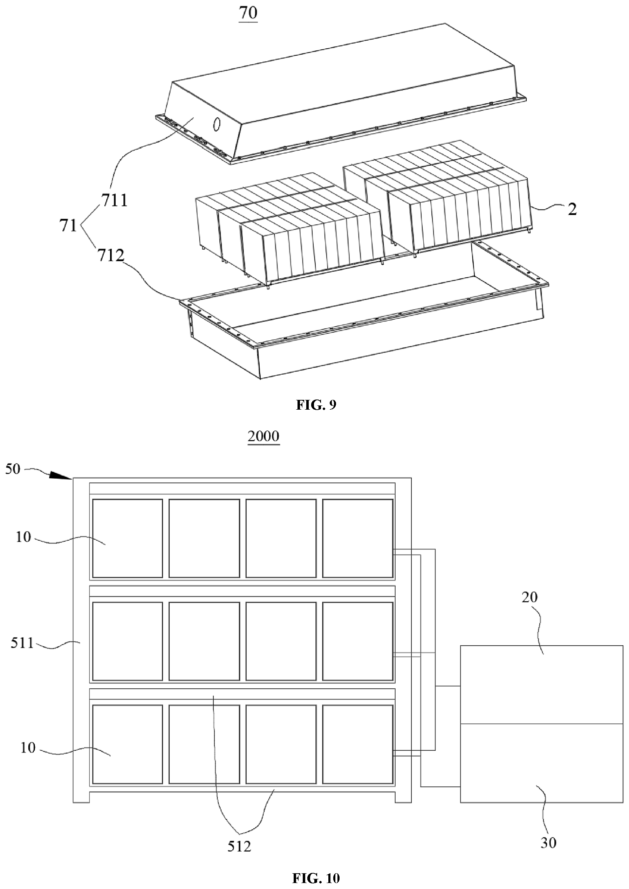

With reference to FIG. 9, the plurality of energy units 2 may form multi-layer and/or multi-row battery apparatuses 70, and each row or each column of the battery apparatuses 70 includes a plurality of battery apparatuses 70.

The battery apparatus 70 in the embodiments of the present disclosure may include one or a plurality of battery cell assemblies for providing voltage and capacity. The battery cell assembly may include a plurality of battery cells, and the plurality of battery cells are connected in series or in parallel or in a series-parallel mode through a busbar component.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by bundling a plurality of battery cells with a cable tie.

In some embodiments, the battery apparatus 70 may be a battery pack, and the battery pack includes a box body 71 and one or a plurality of battery cell assemblies accommodated in the box body 71.

As an example, the battery cell assembly may be a battery module, and the battery cell assembly may be accommodated in the box body 71 by fixing the battery module in the box body 71.

As an example, the battery cell assemblies may alternatively be accommodated in the box body 71 by directly fixing the battery cells in the box body 71.

As an example, with reference to FIG. 9, the box body 71 may include a first box body 71171 and a second box body 71271. The first box body 71171 and the second box body 71271 are snapped together, so that an enclosed space is formed in the box body 71 to accommodate the battery cell assemblies. Here, "enclosed" means covered or closed, and may mean sealed or unsealed. The first box body 71171 may be a top cap or a bottom plate.

As an example, the box body 71 may include a top cap, a frame, and a bottom plate. The top cap and the bottom plate are separately connected to the frame, so that the enclosed space is formed in the box body 71 to accommodate the battery cell assemblies.

By way of example, the plurality of energy units 2 are accommodated in at least one compartment body 10.

That is, some of the compartment bodies 10 accommodate the energy units 2, while other compartment bodies 10 do not accommodate the energy units 2; or all the compartment bodies 10 accommodate the energy units 2.

In the embodiments that some of the compartment bodies 10 each accommodate the energy unit 2, one compartment body 10 accommodates the energy unit 2, or a plurality of compartment bodies 10 each accommodate the energy unit 2.

The compartment body 10 accommodates a plurality of energy units 2 which may be battery modules or battery packs.

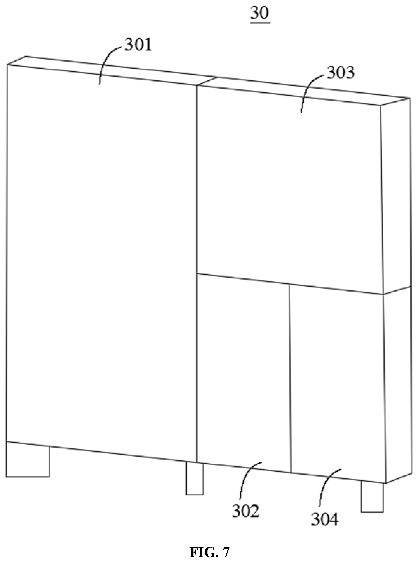

In some embodiments, with reference to FIG. 7, the energy storage apparatus 100 includes a control module 30, and the control module 30 is used to perform electrical control on the plurality of energy units 2 in the compartment body 10.

In the embodiments, the control module 30 is provided, and the control module 30 can control the electric energy input or output of the energy units 2 to implement electrical control on the energy units 2.

By way of example, a dimension of the compartment body 10 in a height direction is less than a dimension of a standard container in a height direction.

With reference to FIG. 3, a dimension a of the compartment body 10 in a length direction is the distance between two ends of the compartment body 10 in the length direction. A dimension b of the compartment body 10 in a width direction is the distance between two ends of the compartment body 10 in the width direction. The dimension h of the compartment body 10 in the height direction is the distance between two ends of the compartment body 10 in the height direction. The dimension a, the dimension b, and the dimension h are the maximum dimensions of the outline of the compartment body 10 in the corresponding directions. The compartment bodies 10 can include eight corner fittings and six box walls, the eight corner fittings are located at eight corners of the cuboid structure of the compartment bodies 10 and protrude out of the box walls of the compartment bodies 10, the total span of two corner fittings arranged in the height direction is equal to the heights of the compartment bodies 10, the total span of two corner fittings arranged in the length direction is equal to the lengths of the compartment bodies 10, and the total span of two corner fittings arranged in the width direction is equal to the widths of the compartment bodies 10. When calculating the dimensions of the compartment bodies 10, pipelines and cables which are connected to the compartment body 10 and located outside the compartment body 10 cannot be calculated as the dimensions of the compartment bodies 10.

The standard containers can be the dimensions of the standard containers in transportation, such as 10 feet, 20 feet, 30 feet, 40 feet or 45 feet, which meets the corresponding standard; and the length, width, and height of the standard containers have the corresponding values. The standard containers can refer to GB/T1413-2023 Series 1 Freight containers-Classification, Dimensions and Ratings.

The 10-foot can include: dimension of 2,991 mm in the length direction, with the tolerance of 0 mm-5 mm; dimension of 2.438 mm in the width direction, with the tolerance of 0 mm-5 mm; dimension of 2,438 mm or less than 2,438 mm in the height direction; and the tolerance of 0 mm-5 mm.

The 20-foot can include: dimension of 6,058 mm in the length direction, with the tolerance of 0 mm-6 mm; dimension of 2,438 mm in the width direction, with the tolerance of 0 mm-5 mm; dimension of 2,896 mm, 2,591 mm or not greater than 2,438 mm in the height direction; and the tolerance of 0 mm-5 mm.

The 30-foot can include: dimension of 9125 mm in the length direction, with the tolerance of 0 mm-10 mm; dimension of 2,438 mm in the width direction, with the tolerance of 0 mm-5 mm; dimension of 2,896 mm, 2,591 mm or not greater than 2,438 mm in the height direction; and the tolerance of 0 mm-5 mm.

The 40-foot can include: dimension of 12192 mm in the length direction, with the tolerance of 0 mm-10 mm; dimension of 2,438 mm in the width direction, with the tolerance of 0 mm-5 mm; dimension of 2,896 mm, 2,591 mm or not greater than 2,438 mm in the height direction; and the tolerance of 0 mm-5 mm.

The 45-foot can include: dimension of 13,716 mm in the length direction, with the tolerance of 0 mm-10 mm; dimension of 2,438 mm in the width direction, with the tolerance of 350 mm-5 mm; dimension of 2,591 mm or 2,896 mm in the height direction; and the tolerance of 0 mm-5 mm.

In the embodiments of the present disclosure, for the compartment bodies 10 of various dimensions, the dimensions ±1%, ±2%, ±3%, ±4%, and ±5% may be regarded as the dimensions within the tolerance range.

The dimension of the compartment body 10 in the height direction is set to be less than the dimension of the standard container in the height direction to reduce the dimension of the compartment body 10. This reduces the manufacturing costs of the energy storage apparatus 100, and can further reduce a total weight of the compartment body 10 that accommodates the energy units 2 and the like, helping to relieve the problem of overweight in transportation, and reducing the transportation costs of the energy storage apparatus 100.

Certainly, in some embodiments, the dimension of the compartment body 10 in the height direction may alternatively be set to be greater than or equal to the dimension of the standard container in the height direction.

In some embodiments, the standard container is a 20-foot standard container, with a height of 2,896 mm, 2,591 mm or 2,438 mm.

In some embodiments, the dimension of the compartment body 10 in the length direction is consistent with a dimension of the standard container in a length direction, and the dimension of the compartment body 10 in the width direction is consistent with a dimension of the standard container in a width direction.

In the embodiments, the dimension of the compartment body 10 in the length direction is set to be consistent with the dimension of the standard container in the length direction, and the dimension of the compartment body 10 in the width direction is set to be consistent with the dimension of the standard container in the width direction, helping to facilitate compatibility with transportation tools and lifting appliances of the existing standard container, and reducing the transportation costs of the energy storage cabinet, thereby reducing the use costs of the energy storage cabinet.

By way of example, the dimension of the compartment body 10 in the height direction is greater than or equal to one third of the dimension of the standard container in the height direction.

In some embodiments, the dimension of the compartment body 10 in the height direction is greater than or equal to 850 mm and less than 2,896 mm.

By way of example, the dimension of the compartment body 10 in the height direction may be any one of the following values or any value between any two thereof: 850 mm, 900 mm, 950 mm, 1,000 mm, 1,050 mm, 1,100 mm, 1,150 mm, 1,200 mm, 1,300 mm, 1,400 mm, 1,500 mm, 1,600 mm, 1,800 mm, 2,000 mm, 2,100 mm, 2,200 mm, 2,300 mm, 2,400 mm, 2,500 mm, 2,600 mm, 2,700 mm, 2,800 mm, and 2,895 mm.

In the embodiments, the dimension of the compartment body 10 in the height direction is set to be 850mm ≤ h < 2,896mm, helping to control the total weight of the compartment body 10 to be not greater than 45 tons, and increasing the volume and electric quantity of the energy storage apparatus 100 as much as possible, thereby further reducing the use costs of the energy storage cabinet.

In some embodiments, the dimension of the compartment body 10 in the height direction is greater than or equal to 1,300 mm and less than or equal to 2,400 mm.

By way of example, the dimension of the compartment body 10 in the height direction may be any one of the following values or any value between any two thereof: 1300 mm, 1350 mm, 1400 mm, 1450 mm, 1500 mm, 1550 mm, 1600 mm, 1650 mm, 1700 mm, 1750 mm, 1800 mm, 1850 mm, 1900 mm, 1950 mm, 2000 mm, 2050 mm, 2100 mm, 2150 mm, 2200 mm, 2250 mm, 2300 mm, 2350 mm, and 2400 mm.

This further helps to improve the volume and electric quantity of the energy storage apparatus 100, thereby further reducing the use costs of the energy storage cabinet.

In some embodiments, the energy storage apparatus 100 further includes a connecting mechanism (not shown in the figure), and the connecting mechanism is configured to connect two adjacent compartment bodies 10 in the height direction of the compartment bodies 10. The connecting mechanism includes a support member, and the support member is arranged between two adjacent compartment bodies 10 in the height direction.

The energy storage system 2000 including at least one energy storage apparatus100 means that there may be a plurality of or a plurality of energy storage apparatuses 100.

The support frame 50 has a mounting space therein, and the compartment body 10 is arranged in the mounting space. That is to say, the support frame 50 surrounds the compartment body 10 and can support, protect, and fix the compartment body 10.

According to the energy storage system 2000 provided by the embodiments of the present disclosure, the support frame 50 having the mounting space is provided, the compartment body 10 is arranged in the mounting space and is connected to the support frame 50. That is, the compartment body 10 is mounted at a use site through the support frame 50, and the support frame 50 can support, protect, and fix the compartment body 10, helping to improve the strength of the energy storage apparatus 100 after mounting, thereby improving the mounting reliability of the energy storage apparatus 100. In addition, the support frame 50 can be pre-assembled before being assembled with the energy storage apparatus 100, which reduces the workload of on-site mounting, improves assembly efficiency, facilitates customer use, and reduces use costs of the customer.

In some embodiments, with reference to FIG. 4 to FIG. 6, the support frame 50 includes at least one support unit 51, and each support unit 51 is provided with at least one energy storage apparatus 100. The support unit 51 includes a plurality of support pillars 511 and a plurality of connecting beams 512. The support pillars 511 are connected by the plurality of connecting beams 512 and enclose a mounting space.

The support frame 50 may include one or a plurality of support units 51, and each support unit 51 has the mounting space therein.

Each support unit 51 is provided with one or a plurality of energy storage apparatuses 100. In the embodiments where each support unit 51 is provided with a plurality of energy storage apparatuses100, the energy storage apparatuses 100 are stacked in the mounting space in the height direction.

The support unit 51 includes the plurality of support pillars 511 and the plurality of connecting beams 512. After the support unit 51 is mounted, the support pillars 511 are vertically arranged and the connecting beams 512 are horizontally arranged to enclose a frame structure.

By way of example, the connecting beams 512 include connecting crossbeam arranged in the horizontal direction and vertical connecting beam arranged in the vertical direction to enclose the frame structure. The connecting crossbeams are connected to the supporting pillars 511, and the vertical connecting beams are connected to the connecting crossbeams.

By way of example, the support unit 51 includes four support pillars 511, and the four support pillars 511 are connected by a plurality of connecting beams 512 to form a generally cubic frame.

By way of example, the support unit 51 further has a hollow region in communication with the mounting space, and the hollow region is formed by the support column 511 and the connecting beam 512 spaced apart from each other.

By way of example, a door of the compartment body 10 can be opened and closed through the hollow region.

In the embodiments, the support unit 51 is configured to include the plurality of support pillars 511 and the plurality of connecting beams 512. The support pillars 511 are connected by the plurality of connecting beams 512, to enclose the frame structure. This structure is simple, improves assembly efficiency, and can support, protect and fix the compartment body 10, thereby helping to improve the strength of the energy storage apparatus 100 after mounting.

In some embodiments, there may be a plurality of mounting spaces and a plurality of energy storage apparatuses 100, and the compartment body 10 of at least one energy storage apparatus 100 is arranged in each mounting space.

Each support unit 51 may correspond to one mounting space. That is, there may be a plurality of support units 51.

The compartment body 10 of one energy storage apparatus 100 is arranged in each mounting space, or the compartment bodies 10 of the plurality of energy storage apparatuses 100 are arranged in each mounting space.

Here, the plurality of mounting spaces and the plurality of energy storage apparatuses 100 are provided, that is, the compartment bodies 10 of the plurality of energy storage apparatuses 100 are arranged in the plurality of mounting spaces. Therefore, the mounting of the plurality of energy storage apparatuses 100 can be implemented through the support frame 50, improving the strength of the plurality of energy storage apparatuses 100 after mounting, thereby improving the mounting reliability of the plurality of energy storage apparatuses 100.

In some embodiments, with reference to FIG. 4 to FIG. 6, Some of the connecting beams 512 are spaced apart in a height direction of the support unit 51. The connecting beams 512 and the support pillars 511 enclose the mounting space to form a plurality of sub-regions 55, and the sub-regions 55 are in one-to-one correspondence with the compartment bodies 10.

Here, the plurality of sub-regions 55 are spaced apart in the height direction of the support unit 51.

The plurality of sub-regions 55 share the support pillars 511 and are separated by the connecting beams 512 spaced apart in the height direction of the support unit 51.

The one-to-one correspondence between the sub-regions 55 and the compartment bodies 10 means that each sub-region 55 corresponds to one compartment body 10.

In the embodiments, the plurality of sub-regions 55 are formed by spacing the connecting beams 512 apart in the height direction of the support unit 51, so that the sub-regions 55 are in one-to-one correspondence with the compartment bodies 10. This helps to improve the structural strength of the support unit 51, and helps to reduce the number of the connecting beams 512 while improving the support strength of the support unit 51 for the compartment bodies 10, thereby helping to reduce costs and improve assembly efficiency.

In some embodiments, with reference to FIG. 4 to FIG. 6, each compartment body 10 is connected to the support pillar 511.

By way of example, the support pillar 511 is of an L-shaped structure. That is, the support pillar 511 includes two side edges connected to each other, the joint of the two side edges corresponds to the corner of the compartment body 10, and the L-shaped support pillar 511 has a strong structure.

By way of example, the compartment body 10 is connected to two sides of the support pillar 511.

There is no limitation on the manner of connecting the compartment body 10 to the support pillar 511. For example, the two components may be fastened, welded, or the like.

In the embodiments, the compartment body 10 is connected to the support pillar 511, thereby helping to improve the connecting strength between the compartment body 10 and the support unit 51.

In some other embodiments, the compartment body 10 may be further connected to the connecting beams 512.

In some embodiments, with continuous reference to FIG. 4 to FIG. 6. The support unit 51 includes a support plate 52 arranged at the bottom end of the support pillar 511. The support plate 52 is used to connect to a use region 60 of the energy storage system 2000.

By way of example, the contact area between the support plate 52 and the use region 60 is greater than the contact area between the support pillar 511 and the use region 60.

The use region 60 refers to an mounting position of the support frame 50. By way of example, the use region 60 may be the ground.

By way of example, the support pillars 511 are in one-to-one correspondence with the support plates 52.

In the embodiments, the support plate 52 is provided, and the support pillar 511 is connected to the use region 60 through the support plate 52, further improving the mounting reliability of the support frame 50, thereby further improving the mounting reliability of the energy storage apparatus 100.

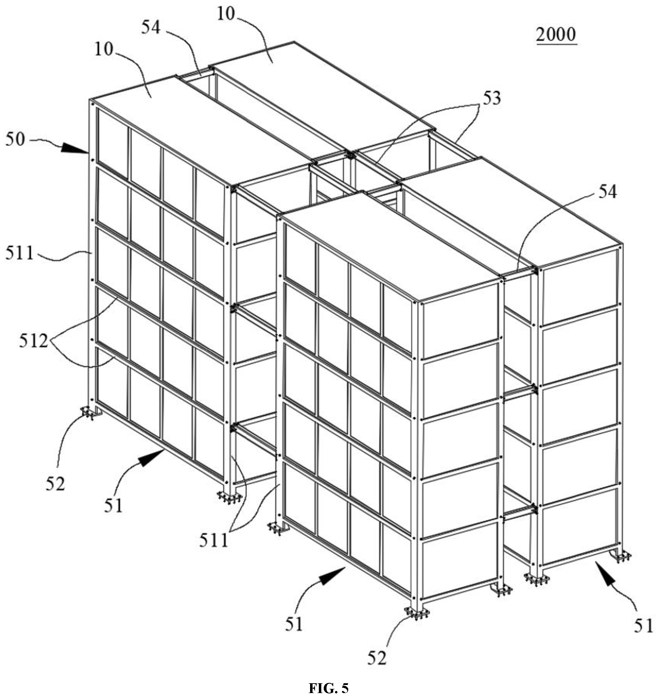

In some embodiments, with reference to FIG. 5, the support frame 50 further includes a first reinforcing beam 53. Some of the support units 51 are arranged in the length direction of the compartment body 10, and the adjacent support units 51 arranged in the length direction of the compartment body 10 are connected through the first reinforcing beam 53.

There is no limitation on the manner of connecting the first reinforcing beam 53 to the support unit 51. For example, the two components may be fastened, welded, or the like.

Here, the first reinforcing beam 53 may be connected to the support pillar 511 of the support unit 51, or may be connected to the connecting beam 512 of the support unit 51, or may be connected to both the support pillar 511 and the connecting beam 512 of the support unit 51.

The specific arrangement, number, and position of the first reinforcing beam 53 are not limited here.

By way of example, some of the first reinforcing beams 53 are spaced apart in the height direction of the support unit 51, and some of the first reinforcing beams 53 are spaced apart in the width direction of the support unit 51.

By way of example, the first reinforcing beam 53 may be arranged at every other sub-region 55.

In this way, the adjacent support units 51 arranged in the length direction of the compartment body 10 are connected into a whole through the first reinforcing beam 53, further improving the structural strength of the support frame 50.

In some embodiments, with reference to FIG. 5, the support frame 50 further includes a second reinforcing beam 54. Some of the support units 51 are arranged in the width direction of the compartment body 10, and the adjacent support units 51 arranged in the width direction of the compartment body 10 are connected through the second reinforcing beam 54.

There is not limitation on the manner of connecting the second reinforcing beam 54 to the support unit 51. For example, the two components may be fastened, welded, or the like.

Here, the second reinforcing beam 54 may be connected to the support pillar 511 of the support unit 51, or may be connected to the connecting beam 512 of the support unit 51, or may be connected to both the support pillar 511 and the connecting beam 512 of the support unit 51.

The specific arrangement, number, and position of the second reinforcing beam 54 are not limited here.

By way of example, some of the second reinforcing beams 54 are spaced apart in the height direction of the support unit 51, and some of the second reinforcing beams 54 are spaced apart in the length direction of the support unit 51.

By way of example, the second reinforcing beam 54 may be arranged at every other sub-region 55.

In this way, the adjacent support units 51 arranged in the width direction of the compartment body 10 are connected into a whole through the second reinforcing beam 54, further improving the structural strength of the support frame 50.

In some embodiments, two adjacent compartment bodies 10 are welded, clamped, locked or connected by a fixing member in the height direction of the support frame 50.

The fixing member may be at least one of a bolt, a nut, a pin, or a rivet. Definitely, the fixing member can also include a fixing plate and the like for fixedly connecting every two adjacent compartment bodies 10 in the height direction.

By way of example, two adjacent compartment bodies 10 are connected through an intermediate twist lock.

In the embodiments, the plurality of compartment bodies 10 may be fixed together first, and then the compartment bodies 10 fixed together are fixed to the support frame 50. Alternatively, the compartment bodies 10 may be fixed to the support frame 50 first, and then the adjacent compartment bodies 10 are fixed.

In the embodiments, the two adjacent compartment bodies 10 in the height direction are connected through the fixing member and can be positionally limited by the fixing member, helping to reduce the risk that the two adjacent compartment bodies 10 move mutually after being stacked, thereby helping to improve the structural stability of the energy storage apparatus 100.

By way of example, the support frame 50 and the compartment bodies 10 are connected by a bolt, and the compartment bodies 10 are connected by a mushroom head. This arrangement allows the compartment body 10 to be quickly mounted in place during a stacking process. After mounting, this arrangement can limit the horizontal displacement. After the compartment bodies are connected to the support frame 50, the displacement of the compartment bodies 10 in three directions can be restrained. Furthermore, after being connected to each other, the compartment bodies 10 are all connected to the support frame 50 to form an integral structure.

Further, after being arranged in a grid shape, the support units 51 are connected to each other through the first reinforcing beam 53 and the second reinforcing beam 54 to form a whole. Still further, the grid-shaped support units 51 can be connected together by the reinforcing beams, and so on. All compartment bodies 10 of an entire station are connected to the support frame 50, so that the support frame 50 of the entire station forms a whole. This further improves the structural strength of the energy storage system 2000, thereby improving the resistance to extreme weather conditions such as earthquakes and typhoons. This not only increases the investment return of the customer but also improves the risk resistance of the customer. When applied in a stacked scenario, the energy storage system 2000 of the present disclosure helps to improve the structural strength of the stacked compartment bodies 10, and is suitable for site layout of stations with high land costs, helping to improve the electricity revenue per unit area. In addition, the overall strength is improved after stacking, thereby increasing the resistance to extreme weather conditions such as earthquakes and typhoons. This improves the risk resistance of the customer while increasing the investment return of the customer.

In some embodiments, with reference to FIG. 3 to FIG. 8, the plurality of compartment bodies 10 include a first compartment body 310 and a second compartment body 410. The first compartment body 310 is located above the second compartment body 410. A limiting pin 42 is arranged at the bottom of the first compartment body 310. A limiting hole 411 is formed in the top of the second compartment body 410. The limiting pin 42 is clamped into the limiting hole 411.

The compartment bodies 10 include the first compartment body310 and the second compartment body 410, meaning that the same compartment body 10 acts as the first compartment body 310 with respect to the compartment body 10 below it, and as the second compartment body 410 with respect to the compartment body 10 above it. Thus, a single compartment body 10 can be both the first compartment body 310 and the second compartment body 410. That is, the limiting pin 42 can be arranged at the bottom of one compartment body 10, while the limiting hole 411 is formed in the top.

In this way, the two adjacent compartment bodies 10 in the height direction can achieve, through the mating of the limiting pin 42 and the limiting hole 411, the purpose of restricting the relative movement of the two adjacent compartment bodies 10 by a simple structure.

The limiting hole 411 in the top of the second compartment body 410 may be an opening for hoisting the compartment body 10. Therefore, in the hoisting stage of the compartment body 10, the compartment body 10 is hoisted through the opening. After the compartment body 10 is hoisted, the opening in the top of the compartment body 10 is mated with the limiting pin 42 at the bottom of the adjacent upper compartment body 10, to limit movement of the two adjacent compartment bodies 10, thereby helping to simplify the structure of the compartment body 10.

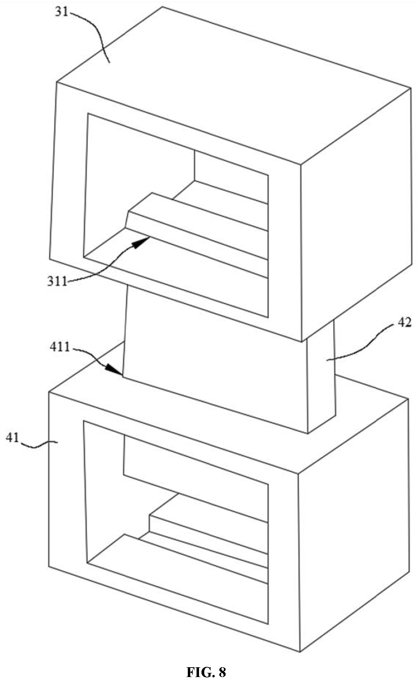

In some embodiments, with reference to FIG 3 and FIG. 8, a first limiting member 31 is arranged at the bottom of the first compartment body 310. The first limiting member 31 is provided with a limiting slot 311. A second limiting member 41 is arranged on the top of the second compartment body 410. The second limiting member 41 is provided with the a limiting hole 411. Two ends of the limiting pin 42 are respectively clamped into the limiting slot 311 and the limiting hole 411.

The second limiting member 41 may be the above-mentioned hoisting portion, and the limiting hole 411 may be the above-mentioned opening. The limiting hole 411 may alternatively be a hole formed in the first compartment body 310.

In the embodiments, during the process of stacking the compartment bodies 10 in the height direction, the limiting pin 42 is mated with the limiting slot 311 in the upper compartment body 10 of two adjacent compartment bodies 10 and mated with the limiting hole 411 in the lower compartment body 10 of the two adjacent compartment bodies 10. Therefore, the purpose of restricting the relative movement of the two adjacent compartment bodies 10 is implemented by a simple structure.

In some embodiments, at least some of the control modules 30 are arranged in the compartment bodies 10.

Here, some of the compartment bodies 10 accommodate the control modules 30; alternatively, all the compartment bodies 10 accommodate the control modules 30.

Some of the control modules 30 are arranged in the compartment bodies 10, or all the control modules 30 are arranged in the compartment bodies 10.

In the embodiments where some of the compartment bodies 10 accommodate the control modules 30, for the compartment bodies 10 without the control module 30, electrical control can be performed on the energy units 2 through the control module 30 in the other compartment body 10. By way of example, the energy storage apparatus 100 includes two compartment bodies 10, namely the first compartment body 310 and the second compartment body 410, where the first compartment body 310 accommodates the control module 30, the second compartment body 410 accommodates the energy units 2, and the control module 30 in the first compartment body 310 can perform electrical control on the energy units 2 in the second compartment body 410.

When all the compartment bodies 10 accommodate the control modules 30, and the plurality of energy units 2 are arranged in both the first compartment body 310 and the second compartment body 410, the control modules 30 in all the compartment bodies 10 can act together to perform electrical control on the plurality of energy units 2 in the first compartment body 310 and the second compartment body 410. Alternatively, the control module 30 in each compartment body 10 can act independently, that is, the control module 30 in the first compartment body 310 performs electrical control on the plurality of energy units 2 in the first compartment body 310, and the control module 30 in the second compartment body 410 performs electrical control on the plurality of energy units 2 in the second compartment body 410.

Due to a dimension problem of the energy unit 2, there is a situation that the energy units 2 cannot fully fill the compartment body 10, and by arranging the control module 30 in the compartment body 10, the space in the compartment body 10 can be fully utilized, thereby further improving the space utilization rate of the compartment body 10.

In addition, the control module 30 and the compartment body 10 are mounted together, and a pipeline and a line of the control module 30 are connected upon shipment, reducing the workload of on-site mounting of the pipeline and the line of the control module 30, thereby helping to reduce mounting costs.

In some embodiments, at least some of the control modules 30 are arranged outside the compartment bodies 10.

That is, some of the control module 30 are arranged outside the compartment bodies 10, while other control modules 30 are arranged in the compartment bodies 10; or all the control module 30 is arranged outside the compartment bodies 10.

At least some of the control module 30 is arranged outside the compartments 10, so that the influence of the control modules 30 on the energy units 2 can be reduced to a certain extent, and moreover, the control modules 30 do not occupy the spaces in the compartments 10. In addition, the control module 30 is convenient to maintain and replace.

The control module 30 arranged outside the compartment body 10 may be connected to at least one compartment body 10; alternatively, the control module 30 arranged outside the compartment body 10 is separated from the compartment body 10, and the control module and the compartment body are connected through a connecting line or a connecting pipeline.

In some embodiments, with reference to FIG. 7, the control module 30 includes at least one of a main control module 301, a power distribution module 302, a general control module 303, and a fire control module 30430.

The energy unit 2 is electrically connected to the main control module 301. The main control modules 301 are electrically connected to the general control modules 303. The main control module 301, the general control module 303, and the fire control module 30430 are all electrically connected to the power distribution module 302.

The main control module 301 is used to control the input and output of high-voltage electric energy of the energy units 2 in the compartment body 10. The general control module 303 is used to control the on-off action of the main control module 301 in the compartment body 10.

The fire control module 30430 is used to control a fire protection element to act when a fire occurs due to temperature imbalance in the compartment body 10. The fire protection element may be a fire extinguisher, or the like. The fire protection element may be arranged in the compartment body 10.

The power distribution module 302 is used to electrically connect the main control module 301, the general control module 303, and the fire control module 30430, so as to facilitate the connection of circuits of the main control module 301, the general control module 303, and the fire control module 30430, and maintain the normal operation of the main control module 301, the general control module 303, and the fire control module 30430.

In the embodiments where the energy storage apparatus 100 includes a plurality of control modules 30, the plurality of control modules 30 may be the same or different.

By way of example, each compartment body 10 is provided with the control module 30, that is, the control modules 30 are in one-to-one correspondence with the compartment bodies 10, and one control module 30 correspondingly controls the input and output of electric energy of the energy units 2 in one compartment body 10, thereby helping the control module 30 to perform electrical control on the energy units 2.

In some embodiments, with reference to FIG. 3, the energy storage apparatus 100 includes a thermal management module 20, and the thermal management module 20 is used to management temperatures of the plurality of energy units 2.

In the embodiments, the thermal management module 20 is provided, and the thermal management module 20 can manage the temperatures of the energy units 2, thereby reducing the risk of temperature runaway of the energy units 2.

In some embodiments, at least some of the thermal management modules 20 are arranged in the compartment bodies 10.

The thermal management module 20 may be a liquid cooling unit, an air conditioner, a ground source cooling device, or a sea liquid cooling device.

Some of the compartments 10 each accommodate the thermal management module 20, or all of the compartments 10 each accommodate the thermal management module 20.

In the embodiments where some of the compartment bodies 10 accommodate the thermal management modules 20, for the compartment bodies 10 without the thermal management module 20, the temperatures of the energy units 2 can be managed through the thermal management module 20 in the other compartment body 10.

By way of example, the energy storage apparatus 100 includes two compartment bodies 10, namely the first compartment body 310 and the second compartment body 410, where the first compartment body 310 accommodates the thermal management module 20, the second compartment body 410 does not accommodate the thermal management module 20, and the thermal management module 20 in the first compartment body 310 can manage the temperatures of the energy units 2 in the first compartment body 310 and the second compartment body 410.

When all the compartment bodies 10 accommodate the thermal management modules 20, and the plurality of energy units 2 are arranged in the first compartment body 310 and the second compartment body 410, the thermal management modules 20 in all the compartment bodies 10 can act together to control the temperatures of the plurality of energy units 2 in the first compartment body 310 and the second compartment body 410. Alternatively, the thermal management module 20 in each compartment body 10 can act independently, that is, the thermal management module 20 in the first compartment body 310 controls the temperatures of the plurality of energy units 2 in the first compartment body 310, and the thermal management module 20 in the second compartment body 410 controls the temperatures of the plurality of energy units 2 in the second compartment body 410.

Due to a dimension problem of the energy unit 2, there is a situation that the energy units 2 cannot fully fill the compartment body 10, and by arranging the thermal management module 20 in the compartment body 10, the space in the compartment body 10 can be fully utilized, thereby further improving the space utilization rate of the compartment body 10.

In addition, the thermal management module 20 and the compartment body 10 are mounted together, and a pipeline and a line of the thermal management module 20 are connected upon shipment, thereby reducing the workload of on-site mounting of the pipeline and the line of the thermal management module 20, and helping to reduce mounting costs.

In some embodiments, at least some of the thermal management modules 20 are arranged outside the compartment bodies 10.

That is, some of the thermal management modules 20 are arranged outside the compartment bodies 10, and some of the thermal management modules 20 are arranged in the compartment bodies 10. Alternatively, all the thermal management modules 20 are arranged outside the compartment bodies 10.

At least some of the thermal management modules 20 are arranged outside the compartments 10, so that the influence of the thermal management modules 20 on the energy units 2 can be reduced to a certain extent, and the thermal management modules 20 do not occupy the spaces in the compartments 10. In addition, the thermal management module 20 is convenient to maintain and replace.

The thermal management module 20 arranged outside the compartments 10 can be connected to at least one compartment 10, or, the thermal management module 20 arranged outside the compartments 10 are separated from the compartments 10, and the thermal management modules 20 and the compartments 10 are connected through the connecting lines or connecting pipelines.

Definitely, part of the structures of the thermal management module 20 can be arranged outside the compartments 10, while the other part is arranged in the compartments 10.

By way of example, the thermal management module 20 includes cooling fans which are arranged outside the compartments 10. For example, the thermal management module 20 includes cooling fans and heat exchangers which are arranged outside the compartments 10.

Therefore, this facilitates heat exchange of the cooling fans and the heat exchangers with the outside, thereby improving heat exchange efficiency.

In some embodiments, with reference to FIG. 10, the thermal management module 20 and the control module 30 are arranged outside the compartment body 10.

Here, the thermal management module 20 and/or the control module 30 may be arranged in or outside the mounting space.

By way of example, an electrical box, a water inlet and outlet pipe, a high and low voltage wiring harness, fire sensors and pipelines are mounted in the compartment body 10, where adapters for connecting outward, including a water inlet and outlet pipe connecting port, a high and low voltage wiring harness connecting port, and a fire protection connecting port, are mounted on an end wall of the compartment body 10. An external water-cooled unit is connected to the water inlet and outlet connecting port at the end of each compartment body 10, thereby ensuring that the temperature of the internal battery cells is maintained within a reasonable range. An external centralized control cabinet implements charging and discharging, communication control, fire control, or the like through the high and low voltage connecting port and fire protection connecting port at the end.

In some embodiments, the energy unit 2 is a battery cell, and a weight of the single energy unit 2 is 5 kg to 60 kg.

The weight of the single energy unit 2 may be any one of the following values or any value between any two thereof: 5 kg, 10 kg, 15 kg, 20 kg, 25 kg, 30 kg, 35 kg, 40 kg, 45 kg, 50 kg, 55 kg, and 60 kg. As an example, the mass of the single energy unit 22 is 30 kg.

The energy unit 2 has a proper weight, so that a proper amount of energy units 2 can be placed in the compartment body 10, and energy density is moderate under the condition of meeting transportation requirements.

In some embodiments, with reference to FIG. 3, the energy storage apparatus 100 includes an energy storage compartment 100a. The energy storage compartment 100a includes the compartment body 10 and components arranged in the compartment body 10. A weight of the energy storage compartment 100a is denoted as M, M being less than or equal to 45 tons.

The components arranged in the compartment bodies 10 are the energy units 2, connecting pipelines, the control modules 30, thermal management modules 20, or the like.

Here, the energy storage compartment 100a refers to a cabinet body that can be independently transported and hoisted.

By way of example, the weight of the energy storage compartment 100a may be any one of the following values or any value between any two thereof: 10 tons, 15 tons, 20 tons, 25 tons, 30 tons, 35 tons, 40 tons, and 45 tons.

During the process of hoisting the energy storage compartment 100a, a related hoisting apparatus is convenient to operate, and the transportation of the energy storage compartment 100a is facilitated.

To enable the single energy storage compartment 100a to meet the transportation limits of some countries, an overall weight of the energy storage compartment 100a is controlled to be not greater than 45 tons, and the integration level of the energy storage compartment 100a is as high as possible, so that the workload of on-site mounting can be reduced, thereby increasing the energy per unit area, and reducing the investment costs of the customer.

In some embodiments, the energy storage apparatus 100 includes an energy storage compartment 100a. The energy storage compartment 100a includes the compartment body 10 and components arranged in the compartment body 10. The weight of the energy storage compartment 100a is denoted as M, and a total weight of the energy units 2 in the compartment body 10 is denoted as M1, (M1/M) × 100% ≥ 60%.

By way of example, (M1/M) × 100% can be 60%, 61%, 62%, 63%, 64%, 65%, 66%, 67%, 68%, 69%, 70%, 71%, 72%, 73%, 74%, 75%, 76%, 77%, 78%, 79%, 80%, 90%.

Therefore, on one hand, the weight ratio of the energy units 2 in the compartments 10 per unit volume can be increased, thereby increasing the electric quantity of the energy storage apparatus 100 per unit volume; on the other hand, during the transportation of the energy storage apparatus 100, more energy units 2 which contribute to energy storage and are high in production difficulty and cannot be produced at a destination are transported, while other structures can be produced at a place closer to the destination without transportation or reduced transportation; and after the compartments 10 are assembled into the energy storage apparatus 100, the transportation cost of the assembled energy storage apparatus 100 is reduced.

In some embodiments, (M1/M) × 100% ≥ 80%.

By way of example, (M1/M) × 100% can be 80%, 81%, 82%, 83%, 84%, 85%, 86%, 87%, 88%, 89%, or 90%.

In this way, this further helps to reduce the transportation costs of the assembled energy storage apparatus 100.

In some embodiments, the energy storage apparatus 100 includes an energy storage compartment 100a. The energy storage compartment 100a includes the compartment body 10 and components arranged in the compartment body 10. The weight of the energy storage compartment 100a is denoted as M. A plurality of battery apparatuses 70 are arranged in the compartment body 10. Each battery apparatus 70 includes a box body 71 and a plurality of energy units 2. The plurality of energy units 2 are accommodated in the box body 71. A total weight of the battery apparatuses 70 is denoted as M2, 70% ≤ (M2/M) × 100% ≤ 90%.

(M2/M) × 100% can be a point value of any one or a point value between any two of 70%, 71%, 72%, 73%, 74%, 75%, 76%, 77%, 78%, 79%, 80%, 81%, 82%, 83%, 84%, 85%, 86%, 87%, 88%, 89%, and 90%.

When (M2/M) × 100% ≥ 70%, the weight ratio of the energy units 2 in the compartment body 10 per unit volume can be improved, and the energy density of the compartment body 10 is improved. When (M2/M) × 100% ≤ 90%, the structural strength of the compartment body 10 can be maintained. Therefore, when 70% ≤ (M2/M) × 100% ≤ 90%, a balance between the energy density of the energy storage compartment 100 and the structural strength of the compartment body 10 can be achieved, resulting in greater practicality of the compartment body 10.

In some embodiments, the plurality of battery apparatuses 70 can be arranged in rows and columns, the plurality of battery apparatuses 70 in each row are arranged in the length direction, the plurality of battery apparatuses 70 in each rank are arranged in the height direction, and each battery apparatus 70 includes a thermal management component 72 and a plurality of energy units 2. The compartment body 10 further include a third connector and a plurality of fourth connector. The third connector is in communication with the thermal management module 20 and each fourth connector. Each fourth connector is in communication with the thermal management component 72 of the plurality of battery apparatuses 70 in each column.

By way of example, the plurality of battery apparatuses 70 are arranged in 2 layers and 2 columns, 3 layers and 3 columns, 4 layers and 4 columns, and 4 layers and 3 columns.

It should be noted that the plurality of battery apparatuses 70 may alternatively be arranged in a plurality of rows, such as 2 rows, 3 rows, 4 rows, 5 rows, or 6s rows, or may alternatively be arranged in a plurality of columns, such as 2 columns, 3 columns, 4 columns, 5 columns, or 6 columns.

In some embodiments, a volume of the compartment body 10 is denoted as V, and a total volume of the energy units 2 in the compartment body 10 is denoted as V1, (V1/V) × 100% ≥ 30%.

The energy units 2 include shells, and the volume of the energy units 2 is the volume of the shells. For example, the energy units 2 are square-shell energy units 2, and the product of the length, width and height of the square-shell energy units 2 is the product of the length, width and height of the shells.

In the embodiments that the energy units 2 further include electrode terminals, the electrode terminals are arranged on the shells and partially protrude out of the shells, the electrode terminals are electrically connected to an electrode assembly, and the parts of the electrode terminals protruding out of the shells are not calculated as the volume of the energy units 2.

(V1/V) × 100% can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, or 70%.

On one hand, the weight ratio of the energy units 2 in the compartments 10 per unit volume can be increased, thereby increasing the electric quantity of the energy storage apparatus 100 per unit volume; on the other hand, during the transportation of the energy storage apparatus 100, more energy units 2 which contribute to energy storage and are high in production difficulty and cannot be produced at a destination are transported, while other functional elements such as control elements of the energy storage apparatus 100 can be produced at a place closer to the destination without transportation or reduced transportation; and after the compartments 10 are assembled into the energy storage apparatus 100, the transportation cost of the assembled energy storage apparatus 100 is reduced.

In some embodiments, (V1/V) × 100% ≥ 50%.

(V1/V) × 100% can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, or 90%.

This further helps to reduce the transportation costs of the assembled energy storage apparatus 100.

In some embodiments, the volume of the compartment body 10 is denoted as V. A plurality of battery apparatuses 70 are arranged in the compartment body 10. Each battery apparatus 70 includes a box body 71 and a plurality of energy units 2. The plurality of energy units 2 are accommodated in the box body 71. A total volume of the battery apparatuses 70 is denoted as V2, 50% ≤ (V2/V) × 100% ≤ 80%.

The volume of the energy units 2 is the volume of the box body 71. For example, the box body 71 is of a cuboid structure, and the volume of the energy units 2 is equal to the product of the length, width and height of the box body 71.

(V2/V) × 100% may be any one of the following values or any value between any two thereof: 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%.

When (V2/V) × 100% ≥ 50%, the volume ratio of the energy units 2 in the compartments 10 per unit volume can be improved, and the energy density of the energy storage apparatus 100 is improved; and when (V2/V) × 100% ≤ 80%, the compartments 10 can have structural members with enough volume to maintain the structural strength. Therefore, when 50%≤(V2/V)×100%≤80%, the energy density of the energy storage apparatus 100 and the structural strength of the compartments 10 can be balanced, and the practicability of the compartments 10 is improved.

In some embodiments, with reference to FIG. 3, the energy storage apparatus 100 includes a energy storage compartment 100a. The energy storage compartment 100a includes the compartment body 10 and components arranged in the compartment body 10. Energy of the energy storage compartment 100a is denoted as E, a dimension of the compartment body 10 in a length direction of the compartment body 10 is denoted as a, a dimension of the compartment body 10 in a width direction of the compartment body 10 is denoted as b, 250KW/*m*² < E/(a × b) ≤ 700KW/*m²*.

E/(a × b) can be a point value of any one or a point value between any two of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², 700 KW/m².

The energy E can be obtained from a nameplate of the energy storage apparatus 100.

When E/(a × b) = 250KW/*m²*, the energy storage apparatus 100 can have large energy density, and thus the practicability of the energy storage apparatus 100 is improved; when (a×b)≤700KW/m², the risk that the compartments 10 are large in mass and consequently other compartments 10 are crushed can be reduced, and transportation of the compartments 10 is facilitated. Therefore, when 250KW/*m*² ≤ E/(a × b) ≤ 700KW/*m*², the energy density of the energy storage apparatus 100 and the mass setting of the compartments 10 are balanced, thereby improving the practicability of the energy storage apparatus 100 as well as facilitating the transportation of the energy storage apparatus 100.

In some embodiments, 450KW/*m*² ≤ E/(a × b) ≤ 600KW/*m*².

E/(a × b) can be a point value of any one or a point value between any two of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², 550 KW/m², 600 KW/m².

An as example, E/(a × b) = 490KW/*m²*, The energy density of the energy storage apparatus 100 and the mass setting of the compartments 10 can be further improved, and transportation of the energy storage apparatus 100 is facilitated.

The foregoing are only preferred embodiments of the present disclosure and are not intended to limit the present disclosure, which is subject to various changes and variations for those skilled in the art. Any modifications, equivalent replacements, improvements, etc., made within the spirit and principles of this disclosure are included in the scope of protection of this disclosure.

## Claims

1. An energy storage system, comprising:
a support frame, wherein the support frame has a mounting space therein; and
at least one energy storage apparatus, wherein each energy storage apparatus comprises a control module, a compartment body, and a plurality of energy units, the plurality of energy units are accommodated in the compartment body, the control module is configured to perform electrical control on the energy units in the compartment body, and the compartment body is arranged in the mounting space and is connected to the support frame.

2. The energy storage system according to claim 1, wherein the support frame comprises at least one support unit, each support unit is provided with at least one energy storage apparatus, the support unit comprises a plurality of support pillars and a plurality of connecting beams, and the support pillars are connected through the plurality of connecting beams and forms the mounting space by enclosing; and/or
there are a plurality of mounting spaces and a plurality of energy storage apparatuses, and the compartment body of the at least one energy storage apparatus is arranged in each mounting space.

3. The energy storage system according to claim 2, wherein some of the connecting beams are spaced apart in a height direction of the support unit, the connecting beams and the support pillars divide the mounting space into a plurality of sub-regions, and the sub-regions are in one-to-one correspondence with the compartment bodies.

4. The energy storage system according to claim 2, wherein each compartment body is connected to the support pillar.

5. The energy storage system according to any one of claims 2 to 4, wherein the support unit comprises a support plate arranged at the bottom end of the support pillar, and the support plate is used to connect to a use region of the energy storage system.

6. The energy storage system according to any one of claims 2 to 5, wherein the support frame further comprises a first reinforcing beam, some of the support units are arranged in a length direction of the compartment body, and the adjacent support units arranged in the length direction of the compartment body are connected through the first reinforcing beam.

7. The energy storage system according to any one of claims 2 to 6, wherein the support frame further comprises a second reinforcing beam, some of the support units are arranged in a width direction of the compartment body, and the adjacent support units arranged in the width direction of the compartment body are connected through the second reinforcing beam.

8. The energy storage system according to claim 3, wherein in a height direction of the support frame, the two adjacent compartment bodies are connected by welding, clamping, screw-fastening or connected by a fixing member.

9. The energy storage system according to claim 8, wherein the plurality of compartment bodies comprise a first compartment body and a second compartment body, the first compartment body is located above the second compartment body, a limiting pin is arranged at the bottom of the first compartment body, a limiting hole is formed in the top of the second compartment body, and the limiting pin is clamped in the limiting hole.

10. The energy storage system according to claim 9, wherein a first limiting member is arranged at the bottom of the first compartment body, the first limiting member is provided with a limiting slot, a second limiting member is arranged on the top of the second compartment body, the second limiting member is provided with a limiting hole, and two ends of the limiting pin are clamped in the limiting slot and the limiting hole respectively.

11. The energy storage system according to any one of claims 1 to 10, wherein at least some of the control modules are arranged in the compartment bodies; and/or
at least some of the control modules are arranged outside the compartment bodies.

12. The energy storage system according to any one of claims 1 to 11, wherein the energy storage apparatus comprises a thermal management module, and the thermal management module is configured to manage temperatures of the plurality of energy units.

13. The energy storage system according to claim 12, wherein at least some of the thermal management modules are arranged in the compartment bodies; and/or
at least some of the thermal management modules are arranged outside the compartment bodies.

14. The energy storage system according to any one of claims 1 to 13, wherein the energy unit is a battery cell, and the weight of a single energy unit is 5 kg to 60 kg.

15. The energy storage system according to any one of claims 1 to 14, wherein the energy storage apparatus comprises an energy storage compartment, the energy storage compartment comprises the compartment body and components arranged in the compartment body, and the weight of the energy storage compartment is M, M being less than or equal to 45 tons.

16. The energy storage system according to any one of claims 1 to 15, wherein the energy storage apparatus comprises the energy storage compartment, and the energy storage compartment comprises the compartment body and the components arranged in the compartment body, the weight of the energy storage compartment is M, and a total weight of the energy units in the compartment body is M1, wherein (M1/M) × 100% ≥ 60%.

17. The energy storage system according to claim 16, wherein (M1/M) × 100% ≥ 80%.

18. The energy storage system according to any one of claims 1 to 17, wherein the energy storage apparatus comprises the energy storage compartment, the energy storage compartment comprises the compartment body and the components arranged in the compartment body, the weight of the energy storage compartment is M, a plurality of battery apparatuses are arranged in the compartment body, the battery apparatus comprises a box body and the plurality of energy units, the plurality of energy units are accommodated in the box body, and a total weight of the battery apparatuses is M2, wherein 70% ≤ (M2/M) × 100% ≤ 90%.

19. The energy storage system according to any one of claims 1 to 18, wherein the volume of the compartment body is V, and a total volume of the energy units in the compartment body is V1, wherein (V1/V) × 100% ≥ 30%.

20. The energy storage system according to claim 19, wherein (V1/V) × 100% ≥ 50%.

21. The energy storage system according to any one of claims 1 to 20, wherein the volume of the compartment body is V, the plurality of battery apparatuses are arranged in the compartment body, the battery apparatus comprises the box body and the plurality of energy units, the plurality of energy units are accommodated in the box body, and a total volume of the battery apparatuses is V2, wherein 50% ≤ (V2/V) × 100% ≤ 80%.

22. The energy storage system according to any one of claims 1 to 21, wherein the energy storage apparatus comprises the energy storage compartment, the energy storage compartment comprises the compartment body and the components arranged in the compartment body, the energy of the energy storage compartment is E, the dimension of the compartment body in the length direction of the compartment body is a, and the dimension of the compartment body in the width direction of the compartment body is b, wherein 250 KW/*m*² ≤ E/(a × b) ≤ 700 KW/*m²*.

23. The energy storage system according to claim 22, wherein 450 KW/*m²* ≤ E/(a × b) ≤ 600 KW/*m²*.

24. The energy storage system according to any one of claims 1 to 23, wherein the dimension of the compartment body in a height direction thereof is less than the dimension of a standard container in a height direction thereof.

25. The energy storage system according to any one of claims 1 to 24, wherein the dimension of the compartment body in the length direction thereof is consistent with the dimension of the standard container in a length direction, and the dimension of the compartment body in the width direction thereof is consistent with the dimension of the standard container in a width direction.

26. The energy storage system according to claim 24 or 25, wherein the standard container is a 20-foot standard container, and the height of the standard container is 2896 mm, 2591 mm, or 2438 mm.

27. The energy storage system according to any one of claims 1 to 26, wherein the dimension of the compartment body in the height direction is greater than or equal to 850 mm and less than 2896 mm.

28. The energy storage system according to claim 27, wherein the dimension of the compartment body in the height direction is greater than or equal to 1300 mm and less than or equal to 2400 mm.

29. The energy storage system according to any one of claims 1 to 28, wherein the energy storage system comprises a power conversion apparatus, and the power conversion apparatus is configured to electrically connect to a power generation apparatus and the energy storage apparatus.

30. A charging network, comprising a charging pile and the energy storage system according to any one of claims 1 to 29, wherein the energy storage apparatus is configured to provide electric energy for the charging pile.
